(19) Europäisches Patentamt
European Patent Office
Office européen des brevets

(11) Publication number: 0 196 689 B1

# (12) EUROPEAN PATENT SPECIFICATION

(45) Date of publication of patent specification: 31.08.88

(51) Int. Cl.4: C 04 B 28/04, E 21 B 33/13 // (C04B28/04, 22:00, 22:12, 24:16, 24:18, 24:22)

(21) Application number: 86200287.0

(22) Date of filing: 25.02.86

## (54) Cement slurry composition for cementing wells traversing salt formations, and corresponding cementing method.

(30) Priority: 25.03.85 FR 8504610

(43) Date of publication of application: 08.10.86 Bulletin 86/41

(45) Publication of the grant of the patent: 31.08.88 Bulletin 88/35

(84) Designated Contracting States: DE GB IT NL

(56) References cited:
CH-A- 427 620
FR-A-2 540 098
US-A-2 945 769
US-A-3 582 375
US-A-3 928 052
US-A-4 500 357

CHEMICAL ABSTRACTS, vol. 95, no. 20, February 1981, page 320, abstract no. 174293z, Columbus, Ohio, US; B. OSBAECK et al.: "The influence of the content and distribution of alkalies on the hydration properties of portland cement", & CEW, CHEM. ENG. WORLD 1981, 16(6), 83-9

(73) Proprietor: PUMPTECH N.V.
Atlantic House Noorderlaan 147 Bus 5C
B-2030 Antwerpen (BE)

(72) Inventor: Oberste-Padtberg, Rudiger
3, rue du Chateau
F-42100 St Etienne Terrenoire (FR)
Inventor: Mc Lachlan, Richard
6 Place de l'Hôtel de Ville
F-42000 Saint Etienne (FR)
Inventor: Defosse, Camille
12 Domaine Poyeton
F-42650 Saint Jean Bonnefonds (FR)
Inventor: Rae, Phil Etudes et Fabrication
Dowell Schlumberger Z.I. Molina BP 90
Saint Etienne Cedex 01 (FR)

(74) Representative: Richebourg, Michel François
Etudes et Fabrication Dowell Schlumberger Z.I.
Molina La Chazotte B.P. 90
F-42003 Saint-Etienne Cédex 1 (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 196 689 B1

Courier Press, Leamington Spa, England.

## Description

This invention relates to the cementing of drilling wells, particularly oil wells.

In drilling a well through underground formations in order to produce or inject fluids therein, the well must be cemented both to preserve its integrity and to keep control of the fluids injected therein or produced therefrom, among other purposes.

It is common practice for the production of fluids, such as for production of crude oil, to lower steel tubing into the drill hole. After this, a cement slurry with suitable properties is prepared at the surface and injected into the tubing. Thereafter, the cement slurry is displaced meaning that a displacement fluid is injected behind it up to a level of a few meters above the shoe of the tubing. Nearly all the cement slurry is thus pushed back into the annular space or annulus between the tubing and the wall of the well.

The slurry having been placed, it is allowed to set and its mechanical strength is allowed to develop to obtain sound support for the tubing, suitable bonding with the surrounding rocks of various compositions and isolation of the respective zones from fluid migrations.

A great number of slurry formulations are known which enable the properties of the cement slurry (mainly its density, setting time or thickening time, rheology, fluid loss, free water, compressive strength, permeability and resistance to chemical attack) to be adapted to meet the requirements stemming from the nature of the wells and that of the formations traversed.

A good mix design is especially important when the cement slurry is used to cement a well drilled through salt formations, as the equilibrium conditions between the cement and the saline zones are difficult to establish. Failing to establish these equilibrium conditions soon results in the salts dissolving and the alkalis migrating into the cement which slows the setting of the cement and consequently adversely affects its mechanical strength and produces a poor bond between the cement and the surrounding formations.

Two main cementing techniques have been developed hereto, to seal wells going through salt formations: cementing with slurries strongly laden with salts (from 18% by weight of mix water, up to saturation), and cementing with slurries containing very small amounts of salts (from just a few percent by weight of water, down to 0%).

The first approach thus consists in using high-salt cements.

Since salt formations are drilled with salt-saturated mud, it seemed logical also to use cement slurries either saturated or nearly saturated with salts so that the slurry would be compatible with the drilling mud. The main advantage of this technique is that dissolution of any further quantities of salts from the formation cannot take place, so that a relatively good bond can be obtained between the cement and the surrounding formation.

In fact, however, there are a number of very serious disadvantages associated with the use of such salt-laden slurries, including:

1) Thickening time is difficult to adjust because these cement slurries are "intrinsically" delayed.

2) Said slurries are always viscous, so that it is difficult to adapt their rheology to turbulent flow.

3) FLuid loss from salt-laden slurries is very great.

4) Salt-laden cement slurries are not compatible with other formations or stratums above or below the salt formations for which they were designed. For example, amorphous silica, which is encountered in certain sandstone formations and in acidic volcanic rock, reacts with salts to form expansible alkaline silicates which can completely destroy the formation as well as the cement — a phenomenon known as "silica-alkali reaction".

5) For salt-laden cement slurries to be pumpable, which in some cases can be very difficult, it is generally necessary to add to the slurries large quantities of plastifiers acting as retarders. Accordingly, the slurry has a tendency to gel rather than setting normally, and even such gelling takes place only after an extended period of thickening. Consequently, there is a long period during which the slurry is not liquid and barely transfers the hydrostatic pressure to the formation. Furthermore, this slurry is not yet strong enough to support and protect the tubing. Since the salt formations traversed by the drill hole are highly plastic and can easily flow into the well hole by geostatic pressure, there is obviously a risk of premature collapse of the well tubing.

Thus, although this solution may appear logical, it actually involves more drawbacks than advantages.

The second prior art solution consists in using cement slurries containing little or no salt. This technique is more recent.

It is much easier to control the properties of this type of cement slurry. The main drawback of these slurries are:

1) In order to reduce the quantity of salts incorporated into the cement by abrasion of the rock, the slurry must be pumped into the well very slowly.

2) Despite this precaution however, dissolutions will occur locally, such that high concentrations of salts will develop. Given that salt concentrations of less than 15% by weight of mix water have an accelerating effect on cement setting, it is necessary, in order to avoid premature setting, either to premix a certain quantity of salts with the slurry, or to use retarders. Both of these alternatives, if implemented, at best only enable determination of the minimum thickening time. As an absorption of salts occurs during displacement and setting of the slurry, thickening time will increase in an unpredictable manner.

Salt-free or low-salt cement slurries exhibit a high capacity for dissolving the salts which may be present in the surrounding rocks. Thus, during thickening of the slurry facing a salt zone, the slurry's liquid phase will still act to dissolve certain quantities of salts, such that a void will appear between the cement and the rocks that brings about poor bonding between the cement and the adjoining formation.

Therefore, although such slurries containing little or no salt improve certain cementing characteristics in salt zones, this technique is also less than satisfactory and is limited to just a few specific applications.

It should also be noted that these two known techniques cannot be utilized when salts of magnesium are present in the rock.

A new technique has recently been developed (as per French patent application FR—A—83 20303 (FR—A—2556737) by same Applicant). The cementing slurries according to this technique have a low salt content and contain a silicate which effects a very unique fibrous bond between the rock and the cement. These slurries also have a good rheology, good compressive strength and an adjustable setting time.

The present invention concerns a cement slurry composition having the same fibrous bonding capability as the slurries just-mentioned, combined with excellent fluid loss control.

Fluid loss is understood to correspond to the passage, and therefore the loss, of the cement slurry's insterticial water into the formations surrounding the hole. This brings about a profound change in the characteristics of the slurry (density, rheology, setting time and so on) which cannot be countered from the surface and which can defeat cementing operations or make necessary additional, secondary cementing work.

Fluid loss control is therefore an essential property of the cement slurries under consideration.

More information on this matter can be found in French patent applications Nos. 83-01369 (FR—A—2540098) and 84-13788 (FR—A—2551244) by same Applicant and it is not deemed necessary to review the teachings of these French patent specifications in detail.

It needs only to be pointed out that the fluid loss control additives for cement compositions described in the said patent applications consist in the product of the hot processing, in the presence of at least one acid (especially hydrochloric acid or sulfuric acid), of an aqueous solution of at least one terpolymer, consisting of the monomer fractions: I or I bis; II and III described in the following Drawing sheet, in which $R_1$ and $R_2$ represent H or $CH_3$, $R_3$ stands for $CONH_2$, CN or $COOCH_3$, $R_4$ stands for H, $CH_3$ or $C_2H_5$ and $R_5$ stands for H, $CH_3$ or $C_2H_5$, or alternatively, $R_4$ and $R_5$ together form a propylene group which, together with the NCO group, forms a pyrrolidone radical, the $Me^+$ charge balancing cation being selected from among $NH_4^+$, $K^+$, $Na^+$ or $Li^+$ and the respective parts by weight of the starting monomers x, y and z for the formulas I, I bis, II and III range respectively from 5 to 50, 25 to 92 and 3 to 70, to which said aqueous solution will preferably be added a compound such as NaF or KF.

Moreover, $R_3$ may be extended to $R_3$=COOH, COONa and other salts, and ethyl, propyl esters and so on.

The additives described in the above-mentioned patent applications and their extensions as described shall be referred to hereinafter as "terpolymers".

It was envisaged to associate the teaching of French application FR—A—83 20303 (FR—A—2556737) (fibrous bonding technique) with the teaching according to which "terpolymers" enhance fluid loss control.

It was found however that the association thus obtained did not provide the expected properties of binding and fluid loss control (cf. the examples given hereinafter).

The present invention on the other hand concerns a composition of Portland cement slurry characterized by the combination of four additives in set proportions.

For convenience, these additives or admixtures will be designated throughout the following description as:

"A1" — mixture of lignosulfonate and Na silicate in a ratio of 1:100 to 1:20

(The ratio will be adjusted on the basis of simple tests of setting delay and mixability);

"Terpolymers" — as defined above;

"A3" — sodium salt of the naphthalenesulfonic acid/formaldehyde condensation product;

"A4" — NaCl.

Roughly, A1 + Terpolymers + A4 represents the above-mentioned attempt to combine the teachings of French patent applications 83.20303 (FR—A—2556737), 83.01369 (FR—A—2540098) and 84.13788 (FR—A—2551244).

As will be apparent from the examples given hereinafter, the properties resulting from such a combination turned out to be very unfavorable.

Inclusion of a fourth additive, namely "A3" above, leads to outstanding fluid loss control provided the concentration of this additive exceeds a certain threshold as explained later herein. Moreover, the quality of the cement/rock fibrous bond, the rheology of the slurry and compressive strength remain excellent.

Finally, the outstanding fluid loss control obtained by the invention does not entail an unacceptable delay of setting (as happens with the prior art fluid loss control agents).

Also, as the examples will show, if agent A3 is kept, but the terpolymers eliminated, the properties again become very unfavorable.

The conclusion which can be drawn from the foregoing is that the terpolymers, for reasons as yet unknown, do not, in the presence of A1 and A4, fulfill the anticipated function of a fluid loss control agent, but that this function is restored and even amplified by the combination with A3.

Additive A3 is a product well known for its dispersant properties.

Nevertheless, when employed in heavy concentrations in salty slurries of the density under consideration, as documented in Table III following, it leads to an over dispersion which causes sedimentation of the cement, and thus to the appearance of free water, which cannot be allowed.

What has been learned from the prior art, therefore, is that the use of this product in salt-laden media and in heavy concentrations was known to be very detrimental.

The invention is thus based upon the discovery of an inter-reaction between the terpolymer agents and additive A3, which combine to produce, in the salty slurries considered here, an outstanding fluid loss control effect without augmenting setting time.

The compositions according to the invention comply with the formulations set forth in the chart which follows, giving the recommended amounts of each additive in liters per metric ton of cement (l/t), or in percent by weight of fresh water (%BWOW) or percent by weight of cement (%BWOC). The preferred ratios are given in the right-hand column.

API CLASS G PORTLAND CEMENT

| | | |
|---|---|---|
| A1 (1/t) | 62 - 72 | 70 |
| Terpolymers (1/t) | 13 - 26 | 13 |
| A3 (1/t) | 40 - 100 | 44 - 60 |
| A4 (%BWOW) | 25 - 37 | 25 - 30 |
| $NiCl_2$ (%BWOC) | 0.5 | 0.5 |
| or $CaCl_2$ | 1.5 - 2 | 1.5 - 2 |
| Water (1/t) | 380 - 480 | 390 - 410 |

The use of $NiCl_2$ or $CaCl_2$ is optional. Their only purpose is to enable a slight reduction in the proportions of terpolymers and A3.

If the mixing water is sea water or a brine, the proportion of $Ar_4$ (NaCl) can be accordingly reduced.

The density of the slurries according to the invention can be reduced by means of a lightening or extending agent such as attapulgite, down to a density of about 1.5.

For the above-described systems, at a density of approximately 1.9, the following holds true:

★ Fluid loss under the conditions of API spec. 10, ie.
— Differential pressure $\Delta P = 70$ bar (7 MPa)
— Temperature: ambient to 100°C
— Elapsed time: 30 min
is less than about 150 ml.

★ The rheology is characterized by:
plastic viscosity (PV) <45 cP (m.Pa.s)
yield value (YV) <15 Pa, approximately.
Yield values less than 10 Pa may often be obtained.

★ 24-hour compressive strength at 93°C (API spec. 10):
207—275 bar (20.7—27.5 MPa)

No NaCl-saturated cement slurry being only slightly delayed and enabling very good fluid loss control was known hereto.

Obviously, usual additives such as antifoam agents, lightening agents and weighting agents (baryte and/or hematite) may be added as required by one skilled in the art.

The examples which follow are given by way of illustration and should not be construed as limiting the scope of the invention.

*Examples 1 through 8* (Table I)

Examples 1, 2 and 8 are according to the invention.

Examples 3 through 7 are given for the purpose of comparison.

*Examples 1, 2 and 8* demonstrate the excellent properties of the slurries according to the invention.

*Examples 3, 4 and 5* show that too-low A3 content (naphthalenesulfonate/formaldehyde) leads to very poor performance in terms of yield value (YV) and, especially, fluid loss control.

*Examples 6 and 7* show that the absence of either A2 or A3 leads to catastrophic results.

Specifically, in Example 6, a YV = −1.8 indicates an over-dispersed slurry (over-extended) which will deposit, leaving a considerable amount of free water; a plastic viscosity of 73 indicates a very viscous slurry (poor pumpability); and a fluid loss of 1100 ml indicates a slurry whose fluid loss is no longer controlled.

As concerns Example 7, no measurements were able to be made due to the extent to which viscosity had developed.

*Examples 9 through 12* are for comparison purposes (Table II).

These examples show that the association of A1 (lignosulfonate + silicate) with a convention fluid loss control agent (hydroxyethylcellulose) in a salty medium leads to quite unacceptable YV values and poor or complete lack of control of fluid loss.

*Examples 13 through 20* are also for comparitive purposes (Table III).

These examples reveal the influence of 1) the salt concentration in the medium and 2) the A3 (naphthalenesulfonate/formaldehyde) concentration on the action of the A3 itself. As can be seen, the additive A3, when used in a salt-laden medium, or when highly concentrated, has an over-dispersion action which is not acceptable.

TABLE I (1)

| Ex. N° | A1 | A2 | A3 | A4 | $NICL_2$ |
|---|---|---|---|---|---|
| | 1/t | 1/t | 1/t | % BWOC | % BWOC |
| 1 | 70 | 13 | 53 | 30 | - |
| 2 | 70 | 17 | 44 | 30 | 0.5 |
| 3 | 70 | 13 | 18 | 30 | - |
| 4 | 70 | 13 | 18 | 30 | 0.5 |
| 5 | 70 | 13 | 18 | 30 | 1.0 |
| 6 | 70 | 13 | - | 30 | - |
| 7 | 70 | - | 44 | 30 | - |
| 8 | 70 | 13 | 53 | 25 | - |

Notes: BWOC = by weight of cement
cement: Dickerhoff G "Black Label"
Density of the slurry: 1.9

1) API Spec. 10 (after 30 min.
(Δ p = 7 mPa
( T = 85°C

2) T = 70°C
P = 35 mPa

3) T = 75°C
P = 35 mPa

TABLE I (2)

| Ex. Nº | YV Pa | PV mPa.s | Fluid Loss ml | TT min | Comments |
|---|---|---|---|---|---|
| 1 | 1.2 | 22 | 44 | 270 2) | invention |
| 2 | 0.2 | 20 | 30 | 472 3) | invention |
| 3 | 6.3 | 32 | 556 | - | too |
| 4 | 19 | 34 | 450 | - | little |
| 5 | 34 | 37 | infinite | - | A3 |
| 6 | -1.8 | 73 | 1 100 | - | w/out A3 |
| 7 | Not measurable because to viscous | | | | w/out A2 |
| 8 | 1.2 | 28 | 83 | 118 | invention |

Notes: TT = Thickening Time
Cement: Dickerhoff G "Black Label"
Density of the slurry: 1.9

1) API Spec. 10 (after 30 min.
($\Delta p$ = 7 mPa
( T = 85°C

2) T = 70°C
P = 35 mPa

3) T = 75°C
P = 35 mPa

TABLE II (1)

| Ex. Nº | A1 1/t | A2 1/t | A3 1/t | A4 % BWOC | $NiCl_2$ % BWOC |
|---|---|---|---|---|---|
| 9 | 50 | - | - | 25 | - |
| 10 | 50 | - | - | 25 | - |
| 11 | 50 | - | - | 30 | - |
| 12 | 50 | - | - | 30 | - |

TABLE II (2)

| Ex. N° | HEC | YV | PV | Fluid Loss |
|---|---|---|---|---|
| | % BWOC | Pa | mPa.s | ml |
| 9 | 0.4 | 117 | 56.2 | 392 |
| 10 | 0.8 | 166 | 43.0 | 320 |
| 11 | 0.4 | 122 | 47.4 | infinite |
| 12 | 0.8 | 209 | 55.1 | infinite |

**Notes:** HEC = hydroxyethylcellulose
% BWOC = % by weight of cement

TABLE III

Temperature: 71°C

| Ex. N° | A3 l/t | A4 %BWOW | P.V. cP | Y.V. Pa | Comments |
|---|---|---|---|---|---|
| 13 | 0 | 0 | 27.4 | 38.9 | |
| 14 | 22.2 | 0 | 15.6 | - 2.63 | 1 cm of sedimentation |
| 15 | 0 | 10 | 15.6 | 14.7 | |
| 16 | 22.2 | 10 | 15.4 | - 1.86 | 1 cm of sedimentation |
| 17 | 44.4 | 10 | 15.8 | - 1.67 | 1.5 cm of sedimentation |
| 18 | 0 | 30 | 14.6 | 3.78 | |
| 19 | 22.2 | 30 | 14.6 | - 1.29 | 2 mm of sedimentation |
| 20 | 44.4 | 30 | 15.2 | - 1.53 | 5 mm of sedimentation |

BWOW = by weight of fresh water

**Claims**

1. A cement slurry for cementing wells, having the following composition:

— Portland cement

— A1 (mixture of lignosulfonate and Na silicate in ratios of 1:100 to 1:20 by weight) included in quantities of 62 to 72 liters per metric ton of cement

— "Terpolymers", ie. the products of the heat treatment, in the presence of at least one acid (notably hydrochloric or sulfuric acid), of the aqueous solution of at least one terpolymer, consisting of the following monomer fractions:

I.

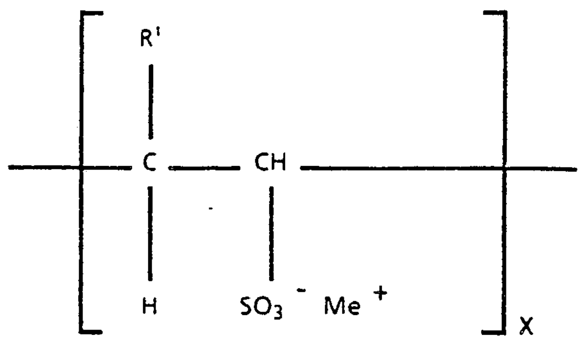

or I bis.

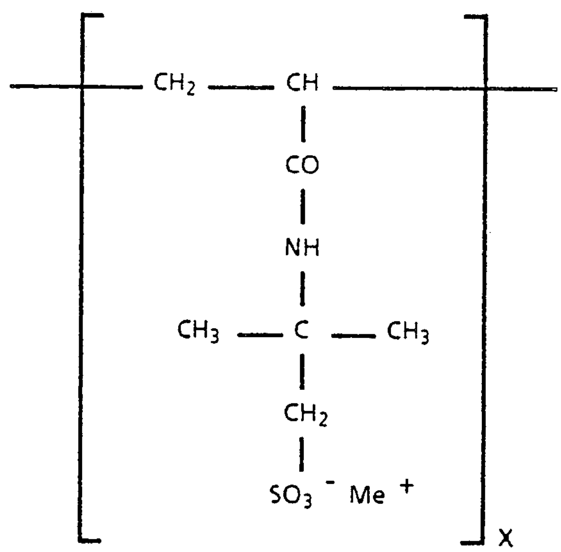

and II.

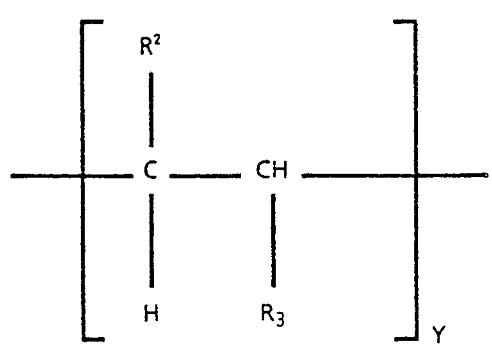

and III.

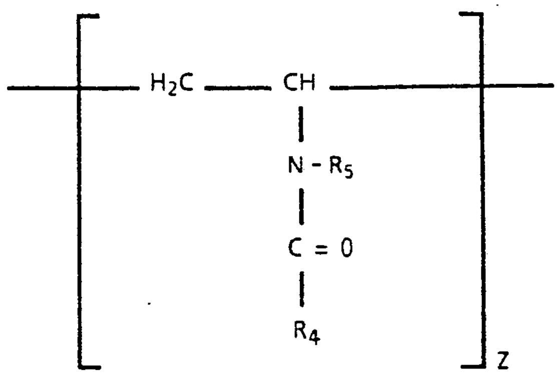

in which $R_1$ and $R_2$ represent H or $CH_3$, $R_3$ represents $CONH_2$, CN or $COOCH_3$, COOH, COONa, COOEt, COOPr and other salts and esters, $R_4$ represents H, $CH_3$ or $C_2H_5$, and $R_5$ represents H, $CH_3$ or $C_2H_5$, or alternatively $R_4$ and $R_5$ together form a propylene group forming a pyrrolidone radical with the NCO group, the $Me^+$ charge balancing cation being selected from among $NH_4^+$, $K^+$, $Na^+$ or $Li^+$ and the respective parts by weight of the starting monomers x, y and z for the formulas I, I bis, II and III range respectively from 5 to 50, 25 to 92 and 3 to 70, to which aqueous solution is preferably added a compound such as NaF of KF:

13 to 26 liters per metric ton of cement

— A3 (Na salt of the naphthalenesulfonic acid/formaldehyde condensation product):

40 to 72 l/ton (metric) of cement.

— A4 (NaCl):

25 to 37% by weight of fresh mix water.

— Mixing water:

380 to 480 l/ton (metric) of cement.

2. A cement slurry for cementing wells, having the following composition:

— Portland cement

— A1 (mixture of lignosulfonate and Na silicate in the ratios of 1:100 to 1:20 by weight):

70 l/t (metric) of cement

— "Terpolymers" — product of the heat treatment in the presence of at least one acid (especially hydrochloric or sulfuric acid) of the aqueous solution of at least one terpolymer consisting of the following monomer fractions:

I.

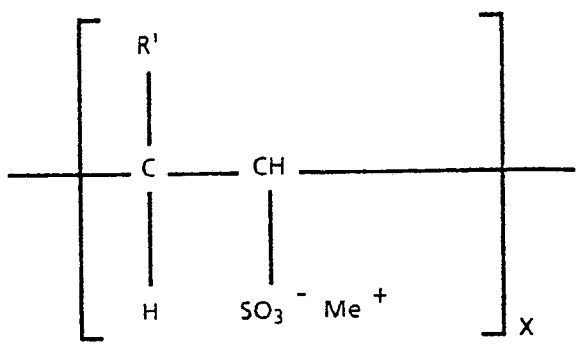

or I bis.

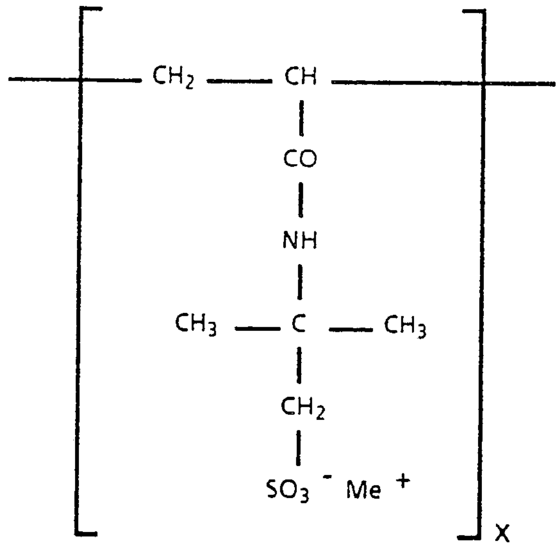

and II.

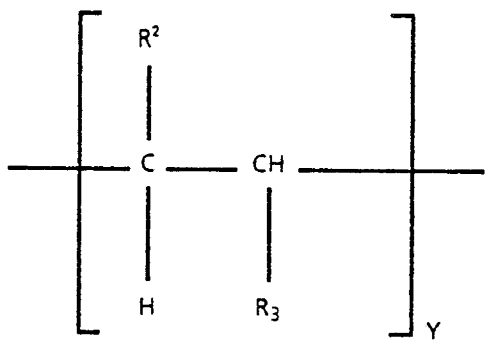

and III.

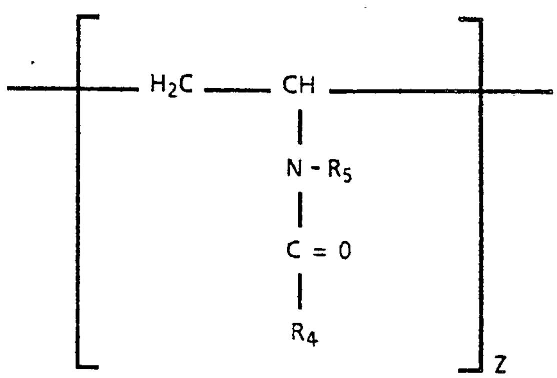

in which $R_1$ and $R_2$ represent H or $CH_3$, $R_3$ represents $CONH_2$, CN or $COOCH_3$, COOH, COONa, COOEt, COOPr and other salts and esters, $R_4$ represents H, $CH_3$ or $C_2H_5$ and $R_5$ represents H, $CH_3$, or $C_2H_5$, or alternatively $R_4$ and $R_5$ together form a propylene group forming a pyrrolidone radical with the NCO group, the cation compensating the $Me^+$ charge being selected from among $NH_4^+$, $K^+$, $Na^+$ and $Li^+$, and the respective parts by weight of the initial monomers x, y and z for the formulas I, I bis, II and III range respectively from 5 to 50, 25 to 92 and 3 to 70, to which said aqueous solution is preferably added a compound such as NaF or KF:

13 l/t (metric) of cement.

— A3 (Na salt of the naphthalenesulfonic acid/formaldehyde condensation product):

44 to 53 l/t (metric) of cement.

— A4 (NaCl):

25 to 30% by weight of fresh mix water.

— Mixing water:

390 to 410 l/t (metric) of cement.

3. Slurry as in Claim 1 or Claim 2 further including $NiCl_2$ in a proportion of approximately 0.5% by weight of cement.

4. Slurry as in Claim 1 or Claim 2 further including $CaCl_2$ in a proportion of 1.5% to 2% by weight of cement.

5. Slurry as in Claim 1, further comprising conventional additives such as lightening or extending agents (attapulgite), weighting agents (baryte, hematite) and antifoam agents.

5. Method of cementing an oil, gas or similar well, consisting in injecting into the well annulus a cement slurry according to any one of claims 1 to 5.

## Patentansprüche

1. Zementaufschlämmung für die Zementierung von Bohrlöchern mit der folgenden Zusammensetzung:

— Portlandzement

— A1 (Mischung von Lignosulfonat und Natriumsilikat im Verhältnis von 1:100 bis 1:20 bezogen auf das Gewicht) enthalten in Mengen von 62 bis 72 l/t Zement

— "Terpolymere", d.h. Produkte der Wärmebehandlung in Anwesenheit von mindestens einer Säure (insbesondere Salz- oder Schwefelsäure) der wässrigen Lösung von mindestens einem Terpolymer, das aus den folgenden Monomerfraktionen besteht:

I.

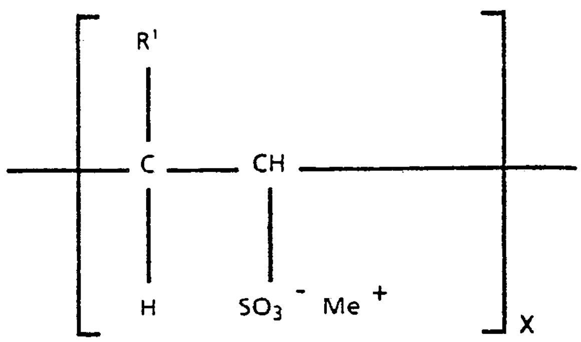

oder I bis.

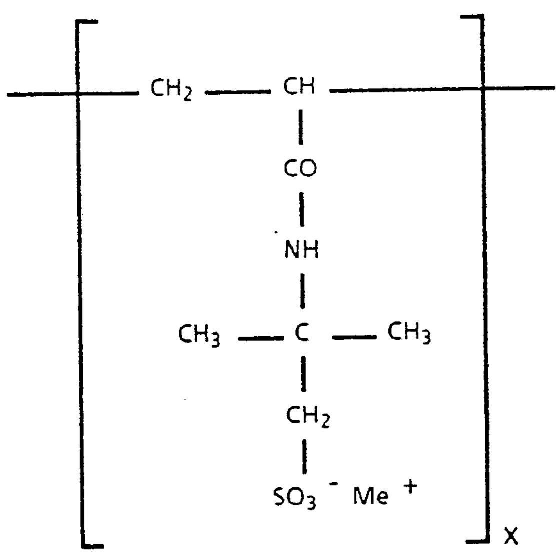

und II.

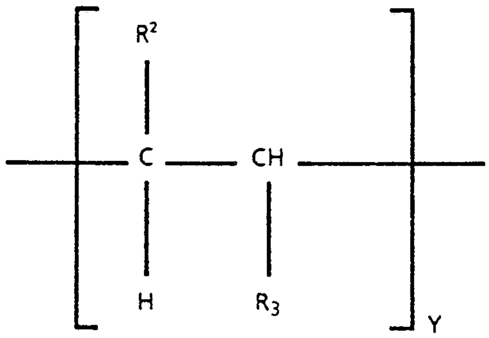

und III.

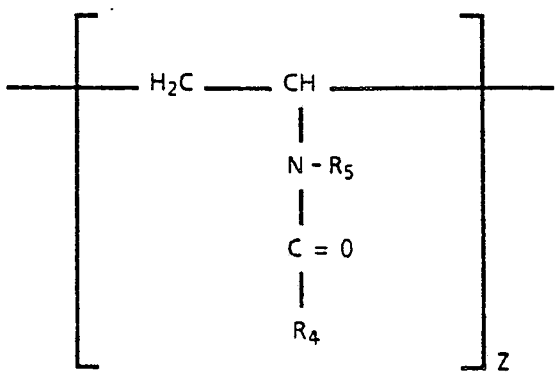

worin $R_1$ und $R_2$ H oder $CH_3$ darstellen, $R_3$ $CONH_2$, CN oder $COOCH_3$, COOH, COONa, COOEt, COOPr und andere Salze und Ester bedeutet, $R_4$ H, $CH_3$ oder $C_2H_5$ bedeutet und $R_5$ H, $CH_3$ oder $C_2H_5$ bedeutet oder alternativ $R_5$ und $R_5$ zusammen eine Propylengruppe bilden, die zusammen mit der NCO-Gruppe eine Pyrrolidonrest bilden, wobei das $Me^+$-Ladungsausgleichskation ausgewählt ist aus $NH_4^+$, $K^+$, $Na^+$ oder $Li^+$ und die jeweiligen Gewichtsteile der Ausgangsmonomeren x, y und z für die Formeln I, I bis, II und III im Bereich von 5 bis 50 bzw. 25 bis 92 bzw. 3 bis 70 liegen, wobei der wässrigen Lösung bevorzugt eine Verbindung wie NaF oder KF zugegeben wird:

13 bis 26 l/t Zement

—A3 (Na-Salz des naphthalinsulfonsäure/Formaldehyd-Kondensationsproduktes):

40 bis 72 l/t (metrisch) Zement

—A4 (NaCl):

25 bis 37 Gew.% bezogen auf frisches Anmachwasser

— Anmachwasser:

380 bis 480 l/t (metrisch) Zement.

2. Zementaufschlämmung für die Zementierung von Bohrlöchern mit der folgenden Zusammensetzung:

— Portlandzement

— A1 (Mischung von Lignosulfonat und Na-Silikat im Verhältnis von 1:100 bis 1:20 bezogen auf Gewicht):

70 l/t (metrisch) Zement

— "Terpolymere" — Produkte der Wärmebehandlung in Anwesenheit mindestens einer Säure (insbesondere Salz- oder Schwefelsäure) einer wässrigen Lösung von mindestens einem Terpolymer bestehend aus den folgenden Monomerfraktionen:

I.

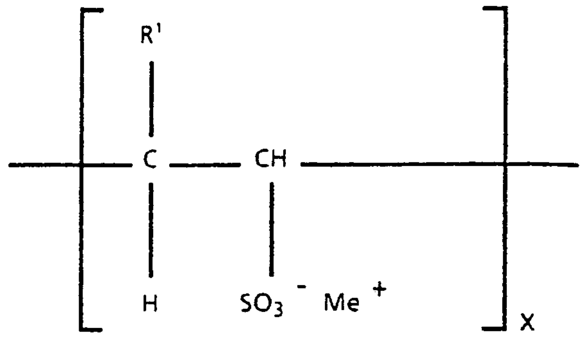

oder I bis.

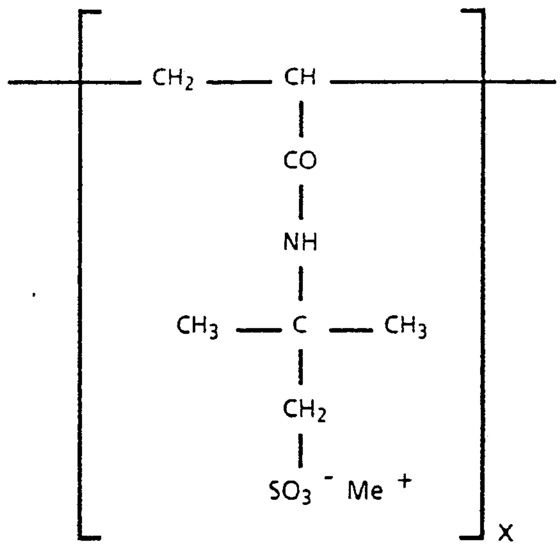

und II.

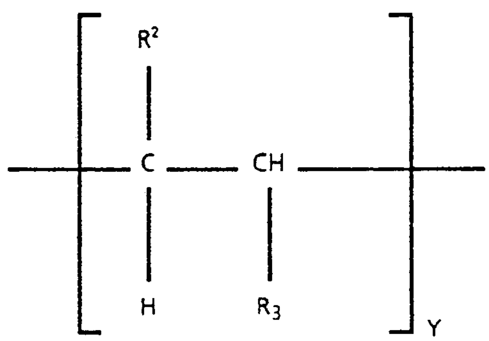

und III.

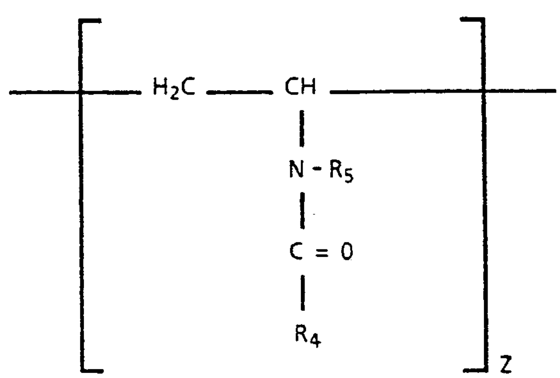

worin $R_1$ und $R_2$ H oder $CH_3$ bedeuten, $R_3$ $CONH_2$, CN oder $COOCH_3$, COOH, COONa, COOEt, COOPr und andere Salze und Ester bedeutet, $R_4$ H, $CH_3$ oder $C_2H_5$ bedeutet und $R_5$ H, $CH_3$ oder $C_2H_5$ bedeutet oder alternativ $R_4$ und $R_5$ zusammen eine Propylengruppe bilden, die mit der NCO-Gruppe einen Pyrrolidonrest bildet, wobei das Kation das die $Me^+$-Ladung ausgleicht ausgewählt ist aus $NH_4^+$, $K^+$, $Na^+$ und $Li^+$ und wobei die jeweiligen Gewichtsteile der Ausgangsmonomeren x, y und z für die Formeln I, I bis, II und III jeweils im Bereich von 5 bis 50 bzw. 25 bis 92 bzw. 3 bis 70 liegen und wobei der wässrigen Lösung bevorzugt eine Verbindung wie NaF oder KF zugegeben wird:

13 l/t (metrisch) Zement

—A3 (Na-Salz des Naphthalinsulfonsäure/Formaldehyd-Kondensationsproduktes):

44 bis 53 l/t (metrisch) Zement

—A4 (NaCl):

25 bis 30 Gew.% bezogen auf frisches Anmachwasser

— Anmachwasser:

390 bis 410 l/t (metrisch) Zement.

3. Aufschlämmung nach Anspruch 1 oder 2 einschließend $NiCl_2$ in einem Anteil von ungefähr 0,5 Gew.% bezogen auf Zement.

4. Aufschlämmung nach Anspruch 1 oder 2 weiter enthaltend $CaCl_2$ in einem Anteil von 1,5 bis 2 Gew.% bezogen auf Zement.

5. Aufschlämmung nach Anspruch 1 weiter enthaltend übliche Additive wie Aufhellungs- oder Streckmittel (Attapulgit), Beschwerungsmittel (Baryt, Hämatit) und Antischaummittel.

6. Verfahren zum Zementieren eines Öl-, Gas- oder ähnlichen Bohrloches, das daraus besteht, daß man in einen Bohrlochringraum eine Zementaufschlämmung nach einem der Ansprüche 1 bis 5 injiziert.

**Revendications**

1. Une pâte de ciment pour cimenter des puits, ayant la composition suivante:

— ciment Portland,

— A1 (mélange de lignosulfonate et de silicate de sodium dans un rapport pondéral compris entre 1:100 et 1:20) dans une proportion de 62 à 72 litres par tonne de ciment,

— "polymères ternaires", c'est-à-dire des produits du traitement à la chaleur, en présence d'un ou de plusieurs acides (notamment l'acide chlorhydrique ou sulfurique), d'un solution aqueuse d'un ou de plusieurs polymères ternaires formés des motifs monomères suivants:

I.

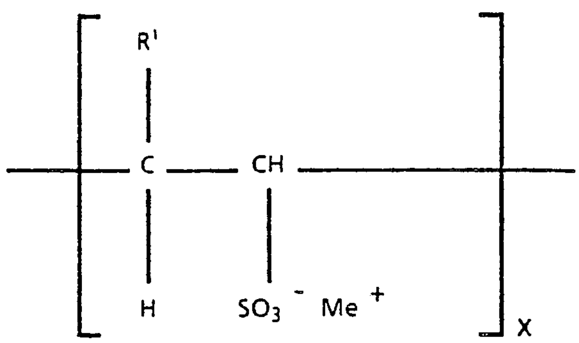

ou I bis.

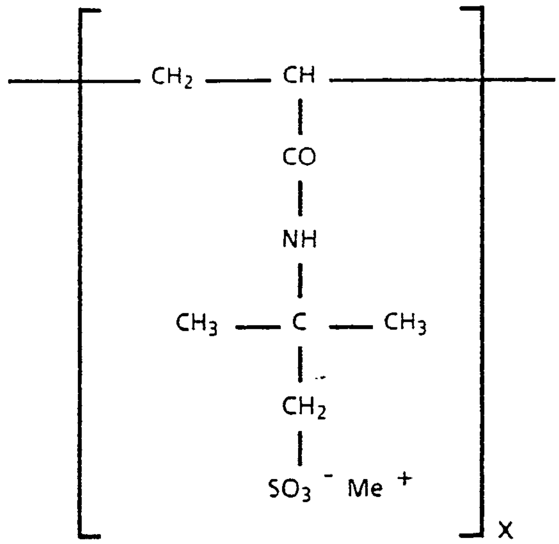

et II.

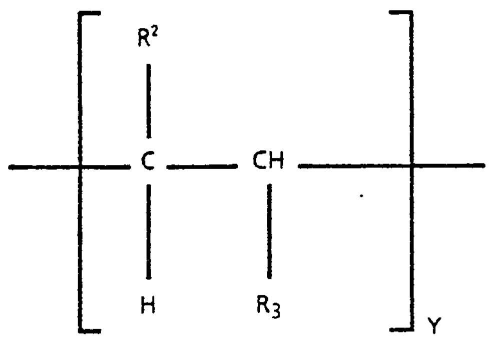

et III.

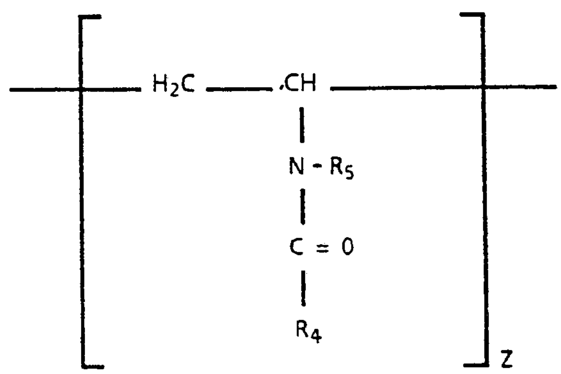

(motifs dans lesquels $R_1$ et $R_2$ représentent chacun H ou $CH_3$, $R_3$ représente $CONH_2$, CN ou $COOCH_3$, COOH, COONa, COOEt, COOPr et autres sels et esters, et $R_4$ et $R_5$ représentent chacun H, $CH_3$ ou $C_2H_5$, ou bien $R_4$ et $R_5$ représentent ensemble un groupe propylène formant un radical de pyrrolidone avec le groupe NCO, le cation $Me^+$ équilibrant la charge négative étant choisi parmi les cations $NH_4^+$, $K^+$, $Na^+$ et $Li^+$, et les parties pondérales des monomères de départ, c'est-à-dire x, y et z, étant respectivement de 5 à 50, de 25 à 92 et de 3 à 70), solution aqueuse à laquelle il est préférable d'ajouter un composé tel que NaF ou KF:

de 13 à 26 litres par tonne de ciment,

—A3 (sel sodique de produit de condensation d'acide naphtalène-sulfonique et de formaldéhyde):

de 40 à 72 litres par tonne de ciment,

— A4 (NaCl):

de 25 à 37% du poids d'eau, et

— eau:

de 380 à 480 litres par tonne de ciment.

2. Une pâte de ciment pour cimenter des puits, ayant la composition suivante:

— ciment portland,

— A1 (mélange de lignosulfonate et de silicate de sodium dans un rapport pondéral compris entre 1:100 et 1:20):

70 litres par tonne de ciment,

— "polymères ternaires" — produit du traitement à la chaleur, en présence d'un ou de plusieurs acides (notamment l'acide chlorhydrique ou sulfurique), d'une solution aqueuse d'un ou de plusieurs polymères ternaires formés des motifs monomères suivants:

I.

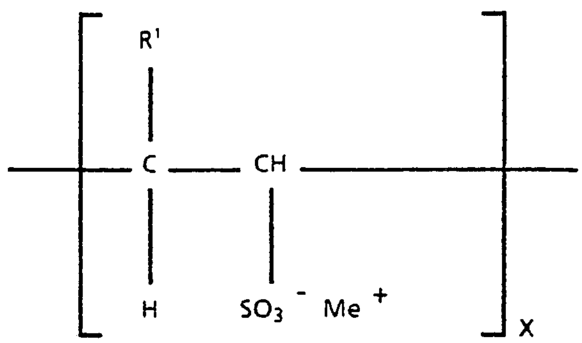

ou I bis.

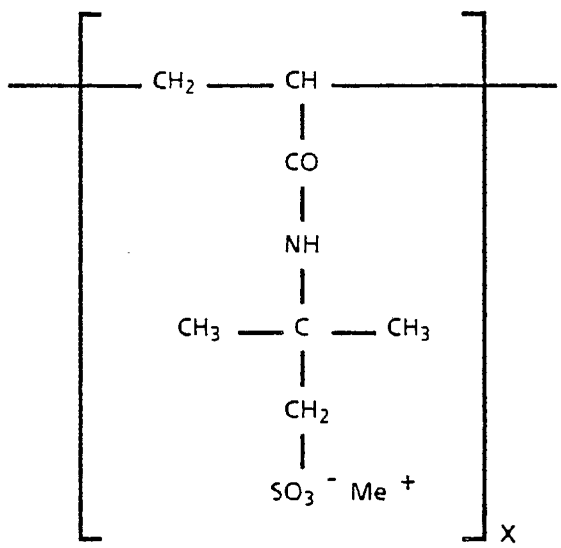

et II.

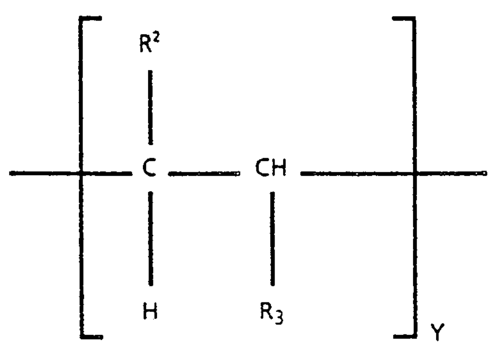

et III.

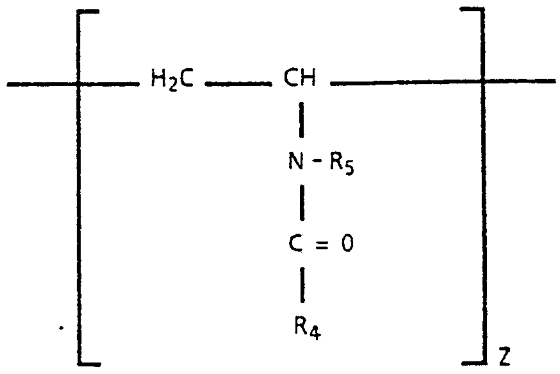

(motifs dans lesquels $R_1$ et $R_2$ représentent chacun H ou $CH_3$, $R_3$ représente $CONH_2$, CN ou $COOCH_3$, COOH, COONa, COOEt, COOPr et autres sels et esters, et $R_4$ et $R_5$ représentent chacun H, $CH_3$ ou $C_2H_5$ ou bien $R_4$ et $R_5$ représentent ensemble un groupe propylène formant un radical de pyrrolidone avec le groupe NCO, le cation $Me^+$ compensant la charge négative étant choisi parmi les cations $NH_4^+$, $K^+$, $Na^+$ et $Li^+$, et les parties pondérales des monomères initiaux, c'est-à-dire x, y et z, étant respectivement de 5 à 50, de 25 à 92 et de 3 à 70), solution aqueuse à laquelle il est préférable d'ajouter un composé tel que NaF ou KF:

13 litres par tonne de ciment,

—A3 (sel sodique de produit de condensation d'acide naphtalène-sulfonique et de formaldéhyde):

44 à 53 litres par tonne de ciment,

— A4 (NaCl):

de 25 à 30% du poids d'eau, et

— eau:

de 390 à 410 litres par tonne de ciment.

3. Pâte selon la revendication 1 ou 2 qui comprend en outre du $NiCl_2$ dans une proportion d'environ 0,5% du poids du ciment.

4. Pâte selon la revendication 1 ou 2 qui comprend en outre du $CaCl_2$ dans une proportion de 1,5% à 2% du poids du ciment.

5. Pâte selon la revendication 1 comprenant en outre des additifs courants tels qu'agents d'allégement ou d'allongement (attapulgite), agents donnant du poids (barytine, hématite) et agents contre les mousses.

6. Méthode de cimentation de puits de pétrole, gaz ou autres, consistant à injecter dans l'espace annulaire du puits une pâte de ciment selon l'une quelconque des revendications 1 à 5.

I.

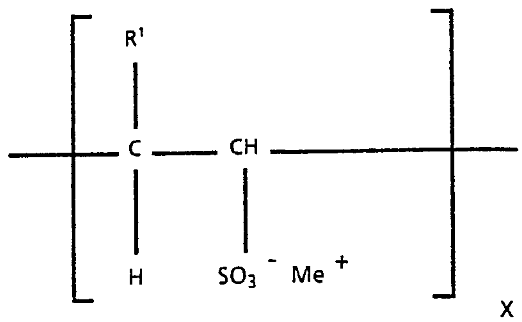

I bis.

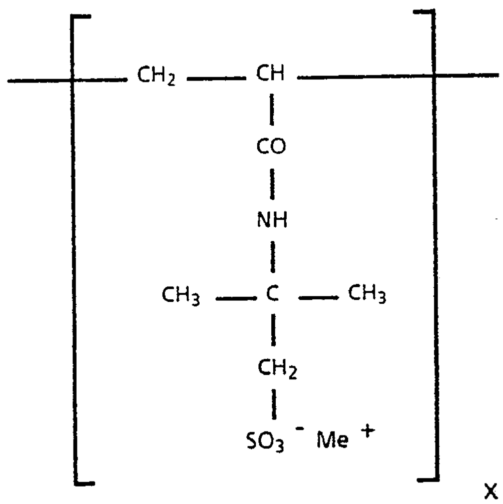

II.

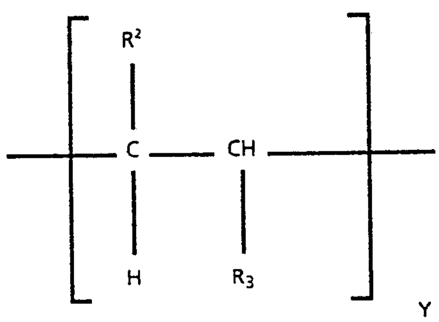

III.